(19) Europäisches Patentamt
European Patent Office
Office européen des brevets

(11) **EP 4 029 634 A1**

(12) **EUROPEAN PATENT APPLICATION**

(43) Date of publication:
**20.07.2022   Bulletin 2022/29**

(21) Application number: **21382037.6**

(22) Date of filing: **19.01.2021**

(51) International Patent Classification (IPC):
**B22F 10/368** (2021.01)     **B22F 10/38** (2021.01)
**B33Y 50/00** (2015.01)     **G06F 30/00** (2020.01)

(52) Cooperative Patent Classification (CPC):
**B33Y 50/00; B22F 10/368; B22F 10/38;**
**G06F 30/20;** B22F 12/90; B33Y 10/00; B33Y 50/02;
G06F 2113/10

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(71) Applicant: **Bull SAS**
**78340 Les Clayes-sous-Bois (FR)**

(72) Inventors:
• **BAILO GIL, Alejandro**
**44500 Andorra (Teruel) (ES)**

• **MARTINEZ FERREIRA, Pablo**
**39100 Sta. Cruz de Bezana (ES)**

(74) Representative: **Novagraaf Technologies**
**Bâtiment O2**
**2, rue Sarah Bernhardt**
**CS90017**
**92665 Asnières-sur-Seine Cedex (FR)**

Remarks:
Amended claims in accordance with Rule 137(2) EPC.

(54) **METHOD AND APPARATUS FOR AUTOMATIC PREDICTION OF THERMAL BEHAVIOUR OF MATERIALS DURING ADDITIVE MANUFACTURING PROCESSES**

(57)     Method for automatic prediction of a thermal behaviour of a material (2) composing an object (3) during laser additive manufacturing, comprising
- an initialization step (S0) comprising discretizing an area surrounding the object,
- iteratively updating (S1) a timer and comparing (S2) a time provided by this timer with times points and, when said time reaches a time point associated with a given cell, triggering an updating step (S3) comprising:

o determining (S31) a quantity of energy exchanged from a previous time point associated with said given cell;
o updating (S32) at least an aggregation state, a temperature and the time point associated with this given cell,
o determining (S33) second quantities of energy, exchanged with a set of neighbour cells,
o updating again (S34) said aggregation state and said temperature

FIG. 1

EP 4 029 634 A1

**Description**

**Technical Field**

The present invention relates to additive manufacturing. More particularly, it aims in simulating the thermal behavior of a material under laser additive manufacturing. According to embodiments, it allows determining a prediction of pore generation in the material.

**Background**

Additive Manufacturing (AM) techniques are of a growing interest to industry due to its capability of manufacturing complex geometries. The AM technology of Laser Powder Bed Fusion (L-PBF) encompassing Selective Laser Melting (SLM) in particular, is experiencing a rapid development in an increasing market of certain application fields such as the aerospace, where the demand for the fundamental understanding and predictability of mechanical properties is becoming higher, namely for the requirements of the certification and qualification process with a competitive cost, as compared to that of the conventional manufacturing process.

AM processes in general, and L-PBF in particular, are very sensitive to many technical parameters. Variations in process parameters and material attributes can influence not only the microstructural features of the resulting product but may also lead to the generation of defects, or anomaly, which is understood as a structural deviation from a desired uniform, isotropic, fully dense solid. Typical defects can be classified into porosity defects, residual stresses, geometrical anomalies, anisotropy and phase stability, microcracks and oxide inclusions. Each kind of these defects influences the resulting production is a different way. For example, certain porosity defects may play a relevant role on the fatigue behaviour. Therefore, in order to predict the mechanical properties before the final product is made, there exist a need to be able to predict for example the porosity defects.

However, so far there is not any implementation system in additive manufacturing apparatuses (printers) that could predict the porosity defects, either in advance/beforehand or during the manufacturing process. In other words, the existing AM printer only monitors the manufacturing parameters and uses simple alert systems. The prediction system is rather based on the printer's specifications which do not include variables such as structure, geometry or other characteristics of the raw material used for the printer. So, the existing additive manufacturing processes cannot avoid any defect in the final product.

Taking into consideration of the enormous difficulties in considering all the parameters that may influence the appearance of pore and the complex interrelationships exited between them, it is a challenge to develop a predictive model which allows to automatically predict the thermal behaviour of the material under AM process, an in particular the porosity appearance, with affordable computational cost to meet (quasi) real-time constraints of the on-the-flow detection.

**Summary**

According to embodiments, it is proposed a method for automatic prediction of a thermal behaviour of a material composing an object during laser additive manufacturing, comprising

- an initialization step comprising discretizing an area surrounding said object, as a mesh of cells and associating an initial time point to each cell of said mesh,
- iteratively updating a timer and comparing a time provided by said timer with said times points and, when said time reaches a time point associated with a given cell, triggering an updating step comprising:

  ◦ determining a quantity of energy exchanged from a previous time point associated with said given cell;
  ◦ updating at least an aggregation state, a temperature and said time point associated with said given cell, according to said quantity of energy;
  ◦ determining second quantities of energy, exchanged with a set of neighbour cells, until a closest in time between said time point associated with said given cell, and respective time points associated with said neighbour cells;
  ◦ updating again said aggregation state and said temperature

Embodiments may comprise other features, alone or in combination, such as:

- wherein updating and updating again comprise predicting generation of pores.
- the method further comprises a step of analysing results of said updating step of a set of said mesh to detect conditions of defects and, accordingly, trigger actions:

- these actions comprises providing an alert to a human-machine interface or transmitting instruction to an apparatus performing said additive manufacturing for aborting said additive manufacturing;
- said conditions are based on the prediction of said generation of pores:
- said area is at least a part of an operation surface of said material onto which a laser beam operates:
- said quantity of energy comprises energy exchanged between said given cell and neighbour cells, energy lost by contact with an outside system, and energy injected by a laser beam:
- energy of said laser beam is injected to a set of cells surrounding the cell corresponding to the laser beam:
- said energy is injected with a value decreasing with the distance to said cell corresponding to the laser beam:
- said updating step is based on data provided by an additive manufacturing apparatus.

According to embodiments, it is proposed a simulation apparatus for automatic prediction of a thermal behaviour of a material composing an object during laser additive manufacturing, comprising means for performing:

- an initialization step comprising discretizing an area surrounding said object, as a mesh of cells and associating an initial time point to each cell of said mesh,
- iteratively updating a timer and comparing a time provided by said timer with said times points and, when said time reaches a time point associated with a given cell, triggering an updating step comprising:

  • determining a quantity of energy exchanged from a previous time point associated with said given cell;
  • updating at least an aggregation state, a temperature and said time point associated with said given cell, according to said quantity of energy;
  • determining second quantities of energy, exchanged with a set of neighbour cells, until a closest in time between said time point associated with said given cell, and respective time points associated with said neighbour cells;
  • updating again said aggregation state and said temperature.

According to embodiments, it is proposed the simulation apparatus is further configured to predict generation of pores in said updating and updating again steps.
According to embodiments the means of said simulation apparatus comprises

- an array of processors; and,
- at least one shared memory including computer program code, the at least one memory and computer program code configured to, with the at least one processor, cause the performance of the simulation apparatus.

According to embodiments, it is proposed a system comprising a simulation apparatus as previously defined and an additive manufacturing apparatus.
According to embodiments, the system further comprises a monitoring apparatus configured to detect conditions of defects and, accordingly, trigger actions.
According to embodiments, it is proposed a computer readable medium encoding a machine-executable program of instructions to perform a method like previously defined.

**Brief Description of the Figures**

Some embodiments are now described, by way of example only, and with reference to the accompanying drawings, in which :

FIG. 1 depicts an overview of an additive manufacturing process according to embodiments of the invention.
FIG. 2 depicts schematically operations of a SLM-based additive manufacturing machine according to embodiments.
FIG. 3 depicts an organigram illustrating an iterative process according to embodiments.
FIG. 4 depicts an organigram illustrating an updating step of an iterative process according to embodiments.
FIG. 5 depicts schematically an area discretized so as to form a mesh, or array, of cells, according to embodiments.
FIG. 6 depicts an example of meshed area surrounding an object being manufacturing, according to embodiments.
FIG. 7 provides an example illustrating the principle of non-uniform time stepping method, according to embodiments of the invention.
FIG. 8 shows a state diagram, according to embodiments of the invention.

**Description of Embodiments**

Additive Manufacturing, AM, opens doors to a new market, enabling the 3D printing of complex objects that would be difficult to obtain by traditional techniques. However, some issues seem still to be addressed for a full commercial deployment. In particular, the quality of the manufactured object is not often fully satisfactory.

According to embodiments of the invention, a tool is provided that evaluates the quality of the manufactured object, in particular regarding the generation of pores.

This tool may have the advantage to provide an estimation of the quality of the object during the manufacturing process, according to substantial real-time constraints. As a consequence, if the estimation is high that the resulting object would get a very low quality, the manufacturing process can be quickly aborted, so as to avoid loss of time and materials. In additional or alternatively, an alert can be triggered to inform a human operator about probable low quality or defects.

Also, according to embodiments, the tool can be used at design time, i.e. without any object being actually manufactured, but on the basis of simulated data, so as to get a prediction of a probable quality of the object once being manufactured. This allows also avoiding losing time and materials and allows testing several designs and/or set of parameters of the AM system, before triggering the actual manufacturing.

Alerting an operator or aborting the manufacturing process as early as possible, potentially in soft real-time, requires that the automatic prediction of the thermal behaviour is performed under extreme performance constraints. For instance, an AM process may take a few hours, whereas existing tools of the prior art may take days for carrying out a thermal simulation.

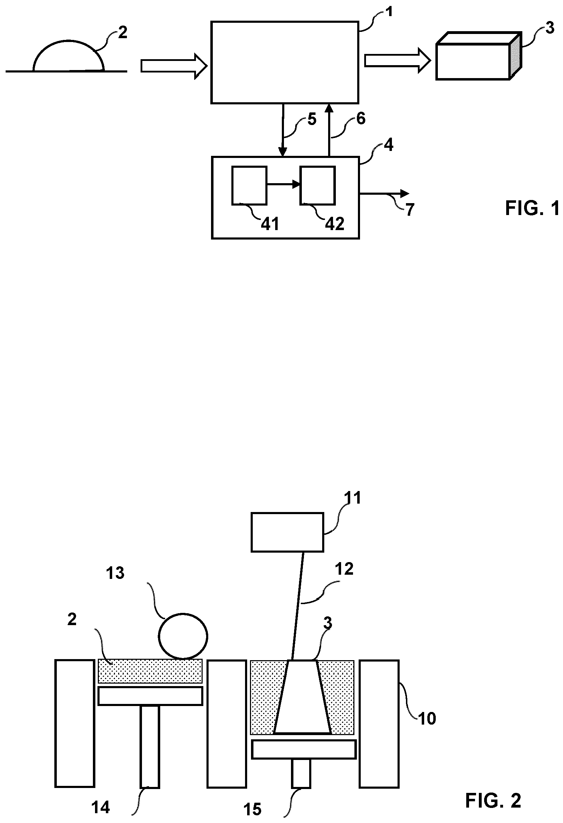

FIG. 1 depicts an overview of an additive manufacturing process according to embodiments of the invention.

Raw materials 2, like metallic alloys, are provided to an additive manufacturing apparatus 1 (or machine...).

Also, a platform 4 is provided and feed with data 5 outputted by the AM apparatus 1. The content of these data will be detailed below. From these data, the platform 4 can automatically predict a thermal behaviour of the material 2 during its use by the additive manufacturing machine 1.

The monitoring apparatus can comprise a simulator 41 and a monitoring apparatus 42. The simulator 41 is configured to simulate (i.e. predict) automatically the thermal behaviour of the material 2 during its use by the additive manufacturing machine 1, from the data 5. The simulator can output the predictions of the thermal behaviour and transmit it to the monitoring apparatus 42.

According to the prediction, the monitoring apparatus 42 may then transmit instructions 6 back to the AM apparatus 5, e.g. for aborting the AM process, and/or trigger an alert 7 for informing a human operator about this prediction.

It can be noticed that an information flow can be continuously provided to human operators, for instance as a display of prediction features. The alert 7 distinguishes over this continuous flow in that it is configured to positively alarm the human operator (e.g. by displaying figures in red colour, by producing a sound, etc.)

The additive manufacturing machine 1 may be of a model known in art or still to be developed. According instructions, it is configured to produce an object 3 from the provided material 2

ISO/ASTM52900-15 defines seven categories of Additive Manufacturing processes within its meaning: binder jetting, directed energy deposition, material extrusion, material jetting, powder bed fusion, sheet lamination, and vat photopolymerization

According to embodiments, the additive manufacturing apparatus 1 may be based on powder bed fusion technique. Powder Bed Fusion techniques, or PBF, include several processes such as DMLS, SLS, SLM, MJF and EBM. Powder Bed Fusion processes can be used with an array of materials and their flexibility allows for geometrically complex structures

In particular, according to embodiments, the AM apparatus may use Selective Laser Melting technique (SLM), also known as direct metal laser melting (DMLM) or laser powder bed fusion (LPBF). SLM is a rapid prototyping, 3D printing, or additive manufacturing technique designed to use a high power-density laser to melt and fuse metallic powders together.

FIG. 2 depicts schematically operations of a SLM-based additive manufacturing machine 1 according to embodiments.

The machine comprises left and right cavities, formed into an infrastructure 10 of the machine and having a volume tuneable by two up/down pistons 14, 15.

The material 2 is initially stored in the left cavity, as, for instance, a metallic powder. A typical example of material may be the Inconel 718 alloy.

The manufacturing process is performed layer by layer, each layer being horizontal in the figure and substantially perpendicular to the laser beam 12.

Once a layer is processed, the piston 14 is moved upward to provide an amount of materials 2 and the piston 15 is moved downward. The movements of the pistons 14, 15 corresponds to the thickness of one layer (40 microns, for example).

A roller 13 is then moved, from left to right, providing the materials which has been pushed up above the infrastructure 10 by the left piston 14, into the volume of the right cavity which has been created by the downward movement of the right piston 15.

Then the laser beam 12 follows a programmed path and melts the additional material 2, which then solidifies and creates a new layer of the object 3.

Another example embodiment of a SLM machine is described in "3D printing of Aluminium alloys: Additive Manufacturing of Aluminium alloys using Selective Laser Melting" of Nesma T. Aboulkhair et al. in Progress in Materials Science, volume 106, December 2019.

According to embodiments of the invention, determining the thermal behaviour of the material comprises determining a prediction of a generation of pores. Several types of pores can be generated during an additive manufacturing and predicted by embodiments of the invention.

Pores appears notably when the material comprises metal, and is the result of the thermal constraints on the metal imposed by the laser beam.

Typically, pores can be generated when the materials is heated by the laser, which produces an evaporation of the materials

Descriptions of how pores are formed and how they imply defects in the resulting manufactured object are widely described in the literature.

For instance, in "3D printing of Aluminium alloys: Additive Manufacturing of Aluminium alloys using Selective Laser Melting" of Nesma T. Aboulkhair et al. in Progress in Materials Science, volume 106, December 2019, it is explained that "One of the most common defects in SLM parts in general, irrespective of the material, is porosity. Most material qualification studies start with the objective of minimising porosity in the fabricated parts. SLM AI samples suffer from extensive porosity" (section 5.1.1)

Many studies and categorization of pores have been proposed like in "Reducing Porosity in AlSi10Mg parts processed by Selective laser melting", by Nesma T. Aboulkhair et al., in Addit Manuf, 1-4 (2014), pp. 77-86. In this article, two types of pores are described. A first type has a spherical morphology with a small size (up to tens of microns) and are referred to as metallurgical pores and, further, or gas pores or hydrogen porosity in reference to their formation mechanism. Their formation is attributed to the presence of moisture on the surfaces of the starting powder as well as the readily-entrapped hydrogen. A second type of pore has an irregular morphology and is larger in size (hundreds of microns), typically spanning across several layers. One can observe a geometric anisotropy, with a flat disc-like shape. They are referred to as keyhole or "lack-of-fusion" pores and can be found to enclose non-molten powder. The presence of non-molten powder might not be observed due to smearing or removal whist polishing when using common metallographic techniques. Some of this type of pore have also been attributed to the presence of oxides in the sample that form during melting and solidification.

The invention may be adapted and configured to predict the generation of various types of pores, providing that some rules of generation can be provided on the basis of available data, as it will be explained below. According to embodiments, the invention is independent of the types of pores.

The invention simulates the thermal field in a piece production through PBF, which evolves with manufacturing time through small temporal steps, $\delta t$, giving an iterative character to the process. In fact, an iteration is the resolution of the temperature field at $t + \delta t$ from the temperature field at t.

The invention proposes a non-uniform spatial evolution over time, so, at a given iteration, the most delayed spatial parts of the temperature field need to be evolved. We talk about "check" when a spatial part requires evolve. We will see that these spatial parts can be represented by cells of a given mesh that discretize the problem.

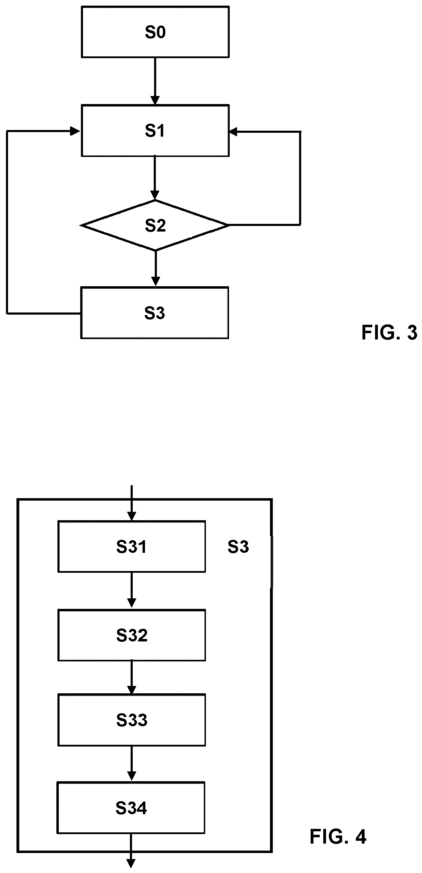

So, the invention lies in an iterative process, as depicted in FIG. 3.

Step S0 corresponds to an initialization step.

Step S1 corresponds to the control variable of the iterative process, here a time provided by a timer component, that orchestrate the entire system, accomplishing that any part be delayed more a given margin

Step S2 corresponds to an evolution test over control variable to check if a condition is met to trigger step S3. If not, this step loops back to Step S1. These checks are at cell level, so only some parts get evolves at a given iteration.

Step S3 corresponds to the modification of the data reflecting the evolution of the material under SLM process. Once these modifications are performed, the process can loop back to Step S1.

The process may stop when stopping conditions are met. These conditions may be linked and even forced by the SLM process itself. In particular, the simulation process can stop when the object is completely manufactured (in real or as simulated), or, if important defect is predicted, when the SLM process is aborted. The time to build the object by AM process may be provided by the AM machine through CLI data.

In addition, the process may go on during additional time after the AM process ends, so as to take into account the thermal behaviour of the objet during its cooling. This additional time

The total time of process come from two concepts: first, the time to build the piece, which is given in CLI; and second, an extra-time to get the piece to cool, at least until the margin when could affect to pore analysis.

According to embodiments, defects may be detected by the monitoring apparatus 42 along the iterative process, by analysing the results of the updating step S3 (outputted by the simulator 41) of a set of cells of the mesh as it will be explained later. This set may comprise all cells of the mesh, or a substantial part of the mesh.

The analysis can be performed continuously (for instance, at each iteration of the process), or according to a configurable rhythm.

The analysis may comprise determining conditions for triggering an action, like triggering an alert to a human-machine interface or transmitting instructions to the AM apparatus for aborting the additive manufacturing process.

In particular, it may comprise deriving an aggregated data from the results of the update step of the set of cells, and comparing this aggregated data to thresholds, forming such conditions.

According to embodiments, prediction of pore generation may be performed at each cell, and an aggregated data may a number of cells where the prediction is above a given threshold. This number may be compared to another threshold, to constitution the conditions.

According to embodiments, the initialization step S0 comprises discretizing an area surrounding the object 3, as a mesh of cells

This area may be the operation surface of the material under SLM process or part of it. The operation surface is the surface of the material onto which the laser beam operates. On the embodiment depicted on FIG. 2, this area may be the upward opening of the right cavity.

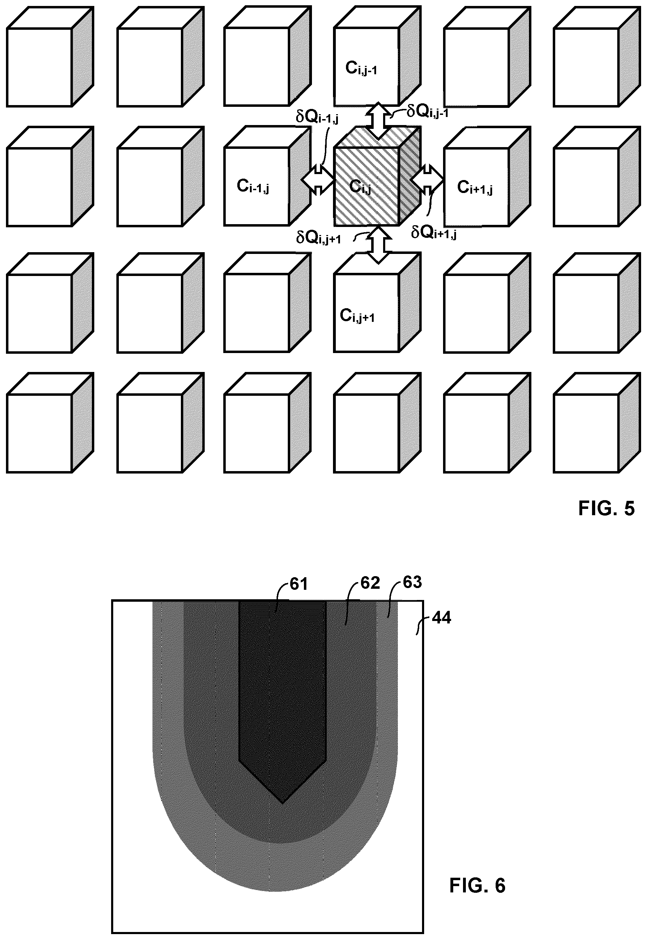

This area can be discretized so as to form a mesh, or array, of cells, as depicted on FIG. 5. Each cell represents then a portion of the full operation surface, or area surrounding the object.

In particular, the simulator 41 can take as inputs the lattice coming from the AM machine 1 through CLI data. Furthermore, the AM machine 1 will provide the laser trajectory as the point of the lattice reached at a given time.

The simulator may adapt the CLI lattice to generate the mesh: for instance, it can do some reductions to a lattice with bigger cells, in space and in time. It can add spatial margin in any dimension, and it can add (as seen above) an extra-time at the end to take into account cooling phenomena. In addition, the global time step, the past from one point to next by the laser, could be divided in m segments (We will view that m is configurable, to get convergence)

According to embodiments of the invention, the thermal behaviour of the material is represented by the set of individual thermal behaviours associated to each of the cells of the area.

In other words, the process lies in determining the thermal behaviour of each cell. It is assumed that each cell will have a uniform thermal behaviour, e.g. one temperature, one enthalpy, one homogeneous state, etc. Accordingly, the size of each cell, which depends on the discretization level. This level shall be a trade-off between the required accuracy of the prediction, and the computing resources. Another parameter is the size of the pores. Small pores shall be not considered, because they don't affect the quality of the resulting object. The problems begin with pore bigger than 50-70 microns. So, the cell's spatial dimension must be 50 micros at least.

It is further assumed that this mesh is set for the duration of the iterative process. In other words, the cells are unalterable, i.e. immovable, non-deformable and without mass flux. Again, this assumption is realistic only if the size of the cells is sufficiently small compared with the size of the area, i.e. if the discretization level is sufficiently fine-grained.

In the iterative process S1-S3, the thermal behaviour of each cell $C_{i,j}$ (wherein i and j represent abscise and ordinate of the respective cell in the full mesh) depends on neighbour cells. In particular, it depends on thermal exchanges with the neighbour cells. These thermal exchanges are due to thermal conduction within the material. Accordingly, for instance, any changes in temperature at a given cell influences the temperatures of the neighbour cells because of this thermal conductivity.

According to embodiments, neighbour cells are limited to the closest cell in the 4 main directions, i.e. $C_{i-1,j}$, $C_{i+1,j}$, $C_{i,j-1}$ and $C_{i,j+1}$.

These 4 neighbour cells then define 4 thermal exchanges with the current cell $C_{i,j}$, respectively $\delta Q_{i-1,j}$, $\delta Q_{i+ij}$, $\delta Q_{i,j-1}$ and $\delta Q_{i,j+1}$.

According to other embodiments, the area surrounding the object may comprise several layers of cells. The neighbour cells may then be along the x, y and z axis. In a particular embodiment, 6 neighbour cells may be defined in the 6 main directions, $C_{i-1,j,k}$, $C_{i+1,j,k}$, $O_{i,j-1,k}$, $C_{i,j+1,k}$, $C_{i,j,k-1}$, and $C_{i,j,k+1}$.

Furthermore, according to embodiments, the initialization step S0 comprises associating initial data to each cell of the mesh. These data comprise an initial time point and thermal data modelling the thermal state of the cell. These (initial) thermal data comprises (initial) temperature, an (initial) aggregation state, etc. At initial conditions, the material is solid powder at room temperature.

The iterative process is associated to a timer that provides a global time t, wherein "global" means it is meaningful for all the cells of the mesh whereas each cell $C_{i,j}$ is associated to respective time points $t_{i,j}^{n}$, wherein n represents an indicium of the time point in a temporal serial of time stamps associated to a same cell $C_{i,j}$.

Step S1 comprises updating the global time t by an increment.

Step S2 comprises comparing this updated global time t with the time points of all cells of the mesh, in order to determine the cells for which the global time reaches their time point. In other words, for each cells, the global time t is compared with their next time point $t_{i,j}^n$, to check whether it trespasses this value.

Thus, step S2 comprises the determination of couples (i,j) for which:

$$\exists n, t_{i,j}^n \leq t$$

For each of these couples i,j (i.e. for each respective cell $C_{i,j}$), an updating step S3 is triggered, wherein at least thermal data are updated. Thermal data comprises at least temperature, aggregation state for the cell. As it will be explained later on, from the aggregation state, and the temperature, data related to generation of pores may be further determined, according to embodiments of the invention.

According to the invention, then, the thermal data of each cell may be adapted at different time points. As it will be seen below, the duration between two successive time points, $\delta t_{i,j} = t_{i,j}^n - t_{i,j}^{n-1}$ may also vary from one cell to another. So, the thermal data of each cell may be updated along different rhythms. However, between two iterations (i.e. two successive time points), the exchanged energy is stored so as to be taken into account at the next time point.

In addition, step S3 comprises updating the next time point of this cell, by determining an updated $\delta t_{i,j}$ and adding it to the previous value of the time step. The step $\delta t_{i,j}$ is computed again at each iteration.

This non-uniform variable time stepping approach allows to focus the computing efforts to cells where there is more activity, i.e. where the thermal data are changing to a larger extent (i.e. with a larger gradient).

Other techniques exist like adaptive meshing. Adaptive meshing is an optimization process where cell sizes vary in the discretized domain, adjusting according to the temperature gradient (or other thermal data), increasing the number of cells when the gradient is greater, or decreasing this number when the gradient is smaller. The adaptive mesh is computed in design time from geometry, using techniques than minimize the estimated error. So, variables are reduced and, consequently, memory and used CPU resources as well.

However, as this instrumentation is in design time, it cannot be adapted for generic usage, in particular without any previous concrete tests for each object to be manufactured. This disadvantage may clearly be blocking.

Also, adaptive time stepping has been proposed as a generic optimization process. Adaptive time stepping consists in making the time step varying according to certain criteria (for instance a global temperature gradient, estimated over the whole mesh). It also allows reducing computation charge, without loss convergence, when the gradient is low. However, the time step is the same for the whole mesh, so that the cells with the highest gradients condition the time reduction. In the case of SLM, the laser path implies abrupt phenomenon, and, thus, high gradient for some of the cells, so that the time reduction would be impossible or, at least, very limited.

Note that with this approach, an imprecision is introduced in the time itself, because the total lattice does not evolution as the same time, like a unison fashion. Instead some cells will be a time small advances that others. Thus, a time associated with each of the nodes can be defined, indicating its last refresh of its temperature and state, just when its energy exchange, on its four (6 in 3D) sides, took place. Although, a priori, these advances evolve freely and according to a local gradient, the evolution is globally linked chained, forcing to everything evolves. This limitation is imposed through strategy, imposing that cell's does not take a time difference, with global time, greater than its own step. So, the dynamics is restored, evolving through small highly linked stringers.

According to the invention, then, a new optimization is proposed wherein the time step is non-uniform over the mesh and adaptive along the time. This optimization process (called "non-uniform time stepping") allows to have more fine-grained time steps in cells where the laser beam is operating (or had operated recently) and to have coarse-grained time steps in other cells. Also, the thermal conductivity can be taken into account, so that cells close to those impacted by the laser beam can have fine-grained time steps as well.

FIG. 6 depicts an example of meshed area surrounding an object being manufacturing. The zone labelled 61 represents a horizontal section of the object, i.e. the path of the laser beam. Due to the high temperature gradient resulting of the laser beam, the time step of zone 61 is small (i.e. the thermal data will be updated at a fast rhythm). Moving from this zone, the influence of the laser beam reduces and implies lower gradients, and accordingly larger time step. Gradually, the time step associated to zones 62, 63 and 64 grows larger.

According to embodiments of the invention, the time step between two time points of a given cell depends on the gradient of the thermal data associated to this cell, and, in particular, to its temperature gradient.

When the global time reaches a time point associated with a given cell, then an updating step S3 is triggered for this given cell.

As depicted in illustrative FIG. 4, the updated step S3 may comprise

- a substep S31, comprising determining a quantity of energy exchanged from the (closest) previous time point associated with the same given cell;

- a substep S32, comprising updating an aggregation state, a temperature and a time point $t_{i,j}^{n}$ associated the said given cell (i,j), according to said quantity of energy;
- a substep S33 comprising determining second quantities of energy, exchanged with a set of neighbour cells, until a closest in time between said time point associated with said given cell, and respective time points associated with said neighbour cells
- a substep S34, comprising updating again said aggregation state and said temperature

At step S31, a quantity of energy is determined, encompassing any exchanges made between the previous time point $t_{i,j}^{n-1}$ and the current time point $t_{i,j}^{n}$ (which has triggered the updating step S3).

The quantity of exchanged energy may be made of 3 different contributions. This quantity relates to a passive energy, i.e. solely depending on elements external to the cell. By contrast, step S33 will relate to active energy, i.e. caused by the internal physics and thermodynamics of the considered cell.

A first contribution consists in energy exchanged with neighbour cells. In fact, this contribution corresponds to the determination of exchanged energy computed at the respective step S33 of neighbour cells.

According to embodiments, an accumulator can be associated with the cell, wherein the neighbour cells can add their respective contributions of exchanged energy according to the rhythm set by their own time points. The accumulation is the addition of exchanged energies, determined by their neighbours, between these two cells and between the current time $t = t_{i,j}^{n}$ and the last time that the given cell was updated, ie. $t_{i,j}^{n-1}$

Once the time point is reached, the accumulator is looked at and all contributions received since the previous time point are taken into account. Then, the content of accumulator can be removed, to accumulate further contributions between this time point until the next time point for the considered cell.

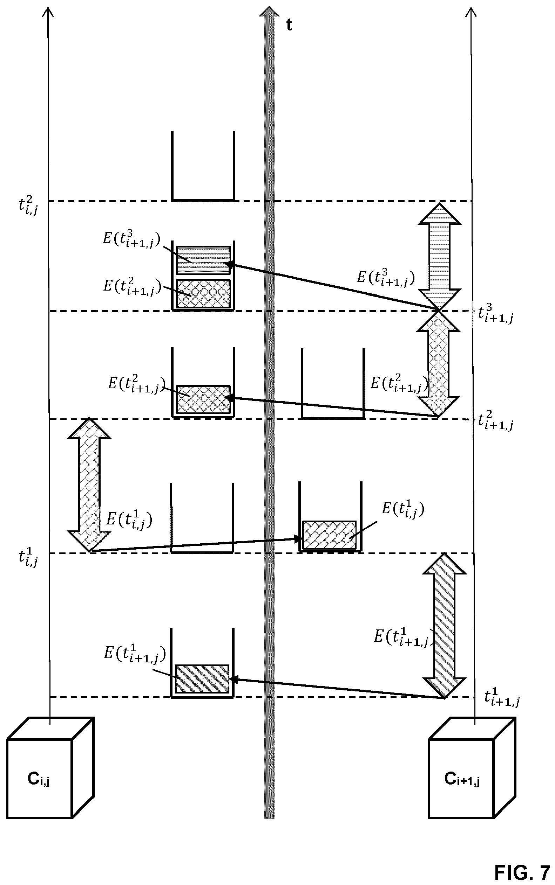

FIG. 7 provides an example illustrating the principle of non-uniform time stepping method, according to embodiments of the invention. In this particular embodiments depicted on FIG. 7, accumulators are used and shown for clarity of the explanations.

In this example, only one neighbour cell, $C_{i+1,1}$, of a current cell $C_{i,j}$ is depicted. However, it appears clearly that the same principles can be applied when more than one neighbour cells are considered.

The central arrow indicates the flow of the global time t, common to all cells. Time points of each cells $C_{i+1,1}$, $C_{i,j}$ are represented on right and left arrows, respectively, for clarity of the figure. However, they are consistent with the global time.

When the global time reaches the value $t_{i+1,j}^{1}$ the cell $C_{i+1,j}$ enters the updating step and determines an energy $E(t_{i+1,j}^{1})$ as it will be seen later, when describing substep S33. This energy is received in the accumulator of the cell $C_{i,j}$ (slashed rectangle).

When the global time reaches the value $t_{i,j}^{1}$, the cell $C_{i,j}$ triggers the updating step S3. It determines an exchanged energy from the energy contributions received in the accumulator, i.e. here only $E(t_{i+1,j}^{1})$. Then, the accumulator is voided.

Furthermore, it determines an energy $E(t_{i,j}^{1})$ as it will be seen later, when describing substep S33. This energy is received in the accumulator of the cell $C_{i+1,j}$

When the global time reaches the value $t_{i+1,j}^{2}$ the cell $C_{i+1,j}$ triggers the updating step and determines an energy $E(t_{i+1,j}^{2})$ as it will be seen later, when describing substep S33. This energy is received in the accumulator of the cell $C_{i,j}$.

When the global time reaches the value $t_{i+1,j}^{3}$ the cell $C_{i+1,j}$ enters the updating step and determine an energy

$E(t^3_{i+1,j})$ as it will be seen later, when describing substep S33. This energy is received in the accumulator of the cell $C_{i,j}$ (rectangle with horizontal lines).

When the global time reaches the value $t^2_{i,j}$, the cell $C_{i,j}$ triggers the updating step S3. It determines an exchanged energy from the energy contributions received in the accumulator, i.e. here $E(t^2_{i+1,j})$ and $E(t^3_{i+1,j})$. Then, the accumulator is voided.

The process goes on iteratively.

A second contribution consists in energy lost $L_{i,j}$ by contact with the outside system, including infrastructure and atmosphere. This second contribution comprises convection exchanges with air, convection exchange with the underlying infrastructure or layer down, Boltzmann emissivity. These values may be computed by usual methods.

A third contribution consists in energy injected $I_{j,j}$ by the laser beam. When the laser bean is directed to a particular cell, this cell receives an abrupt energy.

This substep comprises the determination of the position of the laser beam, so as to map it, at each iteration, to the relevant cells of the mesh. In other words, it comprises determining, for each cell, whether it receives the laser beam or not.

This determination can be done by gathering, from the additive manufacturing apparatus the real-time data (or simulating them) enabling to know the position and direction of the laser at each time.

These data may be compliant with CLI format (Common Layer Interface).

They can be transformed and rearranged to get, for each layer, a data structure where each line has four columns (TYPE;X;Y;TIME) :

TYPE is in/OUT/BORDER
X,Y are integer, the lattice (X,Y)
TIME is real, the time when the laser was in (X,Y) when velocity is v=Vo(prefixed) m/s

According to embodiments, the energy may not be included, because the AM apparatus may have a constant power P and a constant velocity V (there is a transformation from Vo to V).

So, with a given CLI, it is possible to determine, from the time spent on a cell i,j, an amount of injected energy $I_{i,j}$ from these constant parameters.

The energy exchange from laser is its power multiplied by the time between two points of time. This energy may be distributed around the given cell following a gauss distribution, where the bell width is the laser width.

At step S32, an aggregation state, a temperature and a next time point associated with the considered cell are updated, according to said quantity of energy.

The temperature is updated.

The temperature can be updated by using the equation

$$\delta T = \alpha \frac{\delta t}{(\Delta x)^2} . \Delta T$$

wherein:

$\delta T$ is the variation of the cell's temperature with the time, after one iteration;
$\alpha = K / (\rho.c_p)$;
K is a thermal conductivity of the material;
$\rho$ is the density and,
$C_p$ is the specific heart.

A Different Finite Method (DFM) can then be used to time evolution of the temperature maps on the heat equation

$$\rho . c_p . \frac{\partial T}{\partial t} - \nabla . (k \nabla T) = Q$$

where Q is the heat, equivalent to the energy exchanged between neighbour cells.

This equation may be solved in an iterative way, without the need to solve any linear equation systems, so more quickly:

$$T_{i,j}(t + \delta t) = T_{i,j}(t) + \left(\frac{\delta t}{\Delta x^2}\right) \cdot \left(\frac{K}{\rho \cdot c_p}\right) \cdot \Delta T_{i,j} + I_{i,j} - L_{i,j}$$

where $I_{i,j}$ is the energy injected by the laser beam on cell (i,j) and $L_{i,j}$ is the energy lost on the same cell (i,j)

The quantity $\Delta T_{i,j}$ depends on the neighbor cells. In an embodiment where only 4 neighbor cells are considered, as depicted on FIG. 5, this expression can be written:

$$\Delta T_{i,j} = \left(T_{i,j+1}(t) - T_{i,j}(t)\right) + \left(T_{i,j-1}(t) - T_{i,j}(t)\right) + \left(T_{i+1,j}(t) - T_{i,j}(t)\right)$$
$$+ \left(T_{i-1,}(t) - T_{i,j}(t)\right)$$

The temperature of the next step just depends on temperatures of previous iteration. In each iteration, each contact area computes the energy to exchange during the time interval corresponding to one step. The solution will be better as the step is smaller, and it will converge to the true real solution when it approaches zero, because of the non-uniform time stepping method described above.

Furthermore, during substep S32, the aggregation state is updated.

Determining the aggregation step is particularly relevant in embodiments wherein a prediction of the generation of pore is determined.

According to embodiments, some ad-hoc rules can be defined to determine both the update of the aggregation state, and the prediction of pore generation. Different rules may be defined.

These rules may be based on some basic principles and assumptions.

In particular, the hot pores generation is a virulent process that requires very expensive calculations, including fluid mechanics, in smaller lattices (with pore's dimension). Instead, in our case, the pores are introduced through 'ad hoc' rules, forces, but based in physical principles and on previous empirical experiences.

When the laser is applied to a metal cell, it could change its state to plasma, which, if the surface tension is exceeded, escapes, thus allowing the gas in the chamber to pass through and forming a hole, with keyhole sharp.

Most of these holes are simply filled with powder as the next layer is spread, and if it gets melt then it turns in a no-pore. If it does not get melt in following layers, then it ends up being a cold pore. Cold pores may be checked at the end of the process.

In addition, it could happen that the hole thus formed is filled by the surrounding liquid. As this liquid fall, it could cool down by contact with the hole's walls, being able to solidify before reaching the bottom and thus forming a hot hole (the pore is filled with gas). Hot pores may be checked dynamically, at each iteration.

The proposed mechanism is resumed as the two following main rules:

- Laser injection products a gas hole when the metal boils. Its depth is gotten from semi-empiric result.
- The occurrence of liquid around the hole is checked continuously. When there is liquid, its temperature is averaged and then, it computes if it will get solidify before reaching the bottom as the liquid falls across the hole.

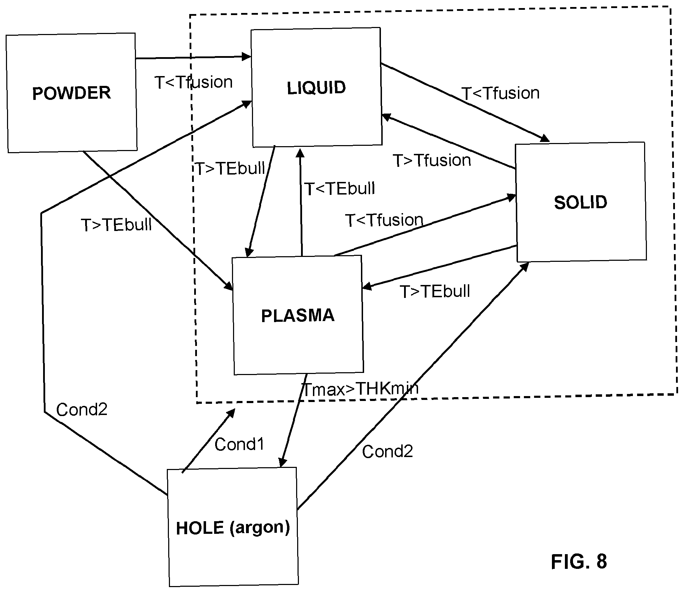

FIG. 8 shows an example of a state diagram, according to embodiments, and implementing these main rules.

Firstly, the metal is powder, so solid. After heat applied:

- If the cell does not get melt, it will a cold pore if it is inside the piece.
- If the cell does get melt: it will become liquid and, if it receives more energy (T>TEbull)), it will become plasma, doing a hole. In that case, the hole's depth is computed through the empirical relation between (depth/laser width) and the logarithm of normalized enthalpy.

Changes of state between solid, liquid and plasma

If the liquid cools (T<Tfusion), it returns to a solid state, but it is distinguished from the powder state, because it has previously been melted. After melt, powder never is returned (in 3D it is possible, by filling the hole by following layers).

Changes in state between solid and liquid are always possible and, it could affect the pores generated by hole by re-melt and filling.

State changes from solid / liquid to plasma are always possible: if would be a pore, it is undone.

Plasma cooling, towards solid / liquid, only takes place if the threshold temperature TKHmin has not been reached (spherical plasma bubble has not broken, without keyhole production).

If the threshold TKHmin has been reached, the surface tension is broken, the gas in the chamber (argon) comes in and competes with the plasma, displacing it: the plasma escapes and the gas enters. We implement this process mechanically through a configurable delay: gas penetration delay time.

When the cell is argon, it can no longer be metal, it is a hole, except for two conditions implemented as rules:

- If the cell receives the laser again (cond1)
- If there is liquid metal around the hole (cond2). Then, it falls on the hole filling it. When the liquid falls through the hole, it contacts with the cooled solid, because it was made several layers ago, producing a cooling proportional to the depth of the keyhole.

Then:

- If it has enough temperature to reach the bottom, in a liquid state, it completely covers the hole, giving rise to a cell in a liquid state.
- If the temperature is not enough, it solidifies as it falls, without reaching the bottom, without covering the hole, giving rise to a vertical-sized hot pore (its size is what was left to fall). The cell becomes solid metal, with pore. This cell can change its state, but the pore will remain, unless the laser converts it back to plasma.

In embodiments based on a 3D mesh (several layers of cells are considered), the following points shall be considered:

- The laser re-met several layers down (A hot hole can be filled if what is around it melts now, again.)
- A cold pore can be melted by laser application on upper layer.
- The empirical relationship between depth and normalized enthalpy can, perhaps, be computed according to the number of cells below that the laser gets evaporate.

The above-mentioned rules are provided as a possible implementation only, although they provide very good experimental results. Other rules may be considered, in addition or in replacement of these rules.

Also, according to other embodiments, other mechanisms can be used for determining the aggregation state and/or a prediction of a pore generation in a given cell. For instance, machine learning or neural network-based techniques may be used.

Through these prediction methods, at each iteration, i.e. each time the step S3 is triggered because the global time t has reached a time point of the cell, one can determine the generation, or, in contrary, the annihilation of a previously generated pore, in the respective cell.

Globally, it becomes then possible, at each time, to have an overview of which cell may comprise a pore.

The granularity of the prediction is a cell of the mesh. IT may not be possible to get an exact localization, but this limitation is balanced with the possibility do tune the size of the cells at initialization step S1.

Furthermore, this granularity allows to reduce dramatically the computing effort, whereas it provides a sufficient basis to estimate a quality of the manufactured object. Indeed, it may not be important to know exactly where a pore will appear, but, rather to estimate a number of probable pores in the object, and coarse areas where pores are more probable to appear.

At a same time in substep S32, other thermal data may also be updated.

Furthermore, in substep S32, the time point is updated, meaning a next time point $t_{i,j}^{n+1}$ is determined, where n is the indicium of the current time point $t_{i,j}^{n}$.

As it has been already described, the next time point depends on the gradient of the temperature. The higher the gradient, the closer will be the next time point, so as to update the thermal data (e.g. aggregation state, temperature, prediction of pore appearance) more often.

So, the time difference δt between the current time point $t_{i,j}^{n}$ and the next time point $t_{i,j}^{n+1}$ can be calculated at each time point as a function of a difference of temperature, or of the exchanged energy $E\left(t_{i,j}^{n}\right)$, which is equivalent.

Several embodiments are possible to determine this function.

An efficient embodiment, in terms of computing efforts, consists in building an abacus from empiric results in previous runs of the process. The full excursion of the energy value can be divided into a set of ranges, and each range can be assigned to a different time step $\delta t$. The time steps $\delta t$ will be decreasing from a maximum step value towards a minimum step value (one iteration, for instance) while the energy of each ranges increases.

According to such an embodiment, the determination of the next time point consists in only accessing a look-up table (the abacus) and, from the energy, determining directly the time step $\delta t$, and then the next time point as

$$t_{i,j}^{n+1} = t_{i,j}^{n} + \delta t$$

Subset S33 comprises determining second quantities of energy, exchanged with a set of neighbour cells, until a closest in time between said time point associated with said given cell, and respective time points associated with said neighbour cells

According to embodiments, a quantity is determined for each cell of the set of neighbour cells, corresponding to the exchanged energy between the current time point $t_{i,j}^{n}$ and another time point associated with the respective neighbour cell. This other time point is the closest in time between the next time point $t_{i,j}^{n+1}$ of the considered cell $C_{i,j}$ and the next time point of the respective neighbour cell.

In other words, while considering a set of 4 neighbour cells, the quantities of energy, $E_{i+1,j}$ $E_{i-1,j}$, $E_{i,j-i}$, $E_{i,j+1}$, defining the energy exchanged between cell $C_{i,j}$ and, respectively, cells $C_{i+1,j}$ $C_{i-1,j}$, $C_{i,j-1}$, $C_{i,j+1}$ can be determined by the amount of energy exchanged during the respective time step $\delta t$: $\delta t_{i+1,j}$ $\delta t_{i-1,j}$, $\delta t_{i, j-1}$, $\delta t_{i,j+1}$ so that

$$\begin{cases} \delta t_{i+1,j} = min\left( t_{i,j}^{n+1} - t_{i,j}^{n}; t_{i+1,j} - t_{i,j}^{n} \right) \\ \delta t_{i-1,j} = min\left( t_{i,j}^{n+1} - t_{i,j}^{n}; t_{i-1,j} - t_{i,j}^{n} \right) \\ \delta t_{i,j-1} = min\left( t_{i,j}^{n+1} - t_{i,j}^{n}; t_{i,j-1} - t_{i,j}^{n} \right) \\ \delta t_{i,j+1} = min\left( t_{i,j}^{n+1} - t_{i,j}^{n}; t_{i,j+1} - t_{i,j}^{n} \right) \end{cases}$$

wherein $t_{i+1,j}$, $t_{i-1,j}$, $t_{i,j-1}$ and $t_{i,j+1}$ represent respectively the next time point for cells $C_{i+1,j}$ $C_{i-1,j}$, $C_{i, j-1}$, $C_{i,j+1}$. (Indicium n is omitted since each cell follows its own rhythm and has thus a respective serial of indicium)

More generally, the time step to be considered to assessing the exchanged energy between a cell A and a cell B can be expressed as:

$$\delta t(A \leftrightarrow B) = min\left( t_{A}^{next} - t_{A}^{current}; t_{B}^{next} - t_{A}^{current} \right)$$

We can revert to FIG. 7 and consider cell $C_{i,j}$. In this depicted example, only one neighbour $C_{i+1,j}$ is depicted for clarity and conciseness of the explanations, but in general, cell $C_{i,j}$ has 4 neighbours, and each of these neighbours perform same iterative processing concurrently with their own respective neighbours.

At time $t_{i+1,j}^{1}$, the cell $C_{i+1,j}$ can determine an energy $E(t_{i+1,j}^{1})$ exchanged with cell $C_{i,j}$ by considering the closest time between its own next time point $t_{i+1,j}^{2}$ and the next time point $t_{i,j}^{1}$, of its neighbour cell, i.e. $C_{i,j}$.

In this example, $t_{i,j}^{1} < t_{i+1,j}^{2}$. Therefore, the energy is calculated during $\delta t = t_{i,j}^{1} - t_{i+1,j}^{1}$, illustrated as a hashed double arrow in the figure. This amount of energy is transmitted to the accumulator of cell $C_{i,j}$.

Cell $C_{i+1,j}$ performs this tasks with its four neighbours.

At this time, $t < t_{i,j}^{1}$ and therefore, cell $C_{j,j}$ does not compute thermal data (step S32).

When the global time t reaches time point $t_{i,j}^1$, cell $C_{i,j}$ first determines exchanged energy from neighbour cells, stored in its accumulator (here $E(t_{i+1,j}^1)$), then updates its thermal data, and then determines an amount $E(t_{i,j}^1)$ of exchanged energy with the neighbor cell $C_{i+1,j}$. For doing that, it considers the time step $\delta t$ to the closest point of time, i.e. between $t_{i,j}^2$ and $t_{i+1,j}^2$. According to this example, $\delta t = t_{i+1,j}^2 - t_{i,j}^1$. Thermal data of cell $C_{i,j}$ are updated again.

At time point, $t_{i+1,j}^2$, cell $C_{i+1,j}$ first determines exchanged energy from neighbour cells, stored in its accumulator (here $E(t_{i,j}^1)$), then updates its thermal data, and then determines an amount $E(t_{i+1,j}^2)$ of exchanged energy with the neighbor cell $C_{i,j}$. For doing that, it considers the time step $\delta t$ to the closest point of time, i.e. between $t_{i,j}^2$ and $t_{i+1,j}^3$. According to this example, $\delta t = t_{i+1,j}^3 - t_{i+1,j}^2$. Thermal data of cell $C_{i+1,j}$ are updated again.

At time point, $t_{i+1,j}^3$, cell $C_{i+1,j}$ first determines exchanged energy from neighbour cells, stored in its accumulator (here empty), then updates its thermal data, and then determines an amount $E(t_{i+1,j}^3)$ of exchanged energy with the neighbor cell $C_{i+1,j}$. For doing that, it considers the time step $\delta t$ to the closest point of time, i.e. between $t_{i,j}^2$ and $t_{i+1,j}^4$. According to this example, $\delta t = t_{i,j}^2 - t_{i+1,j}^2$. Thermal data of cell $C_{i+1,j}$ are updated again.

The iterative process can then goes on, iteratively.

It shall be further noticed that when the accumulated energy is used to update thermal data, the accumulator are emptied, so as to not take into account a same contribution several times.

Knowing the time step $\delta t$, the energy exchanged between two cells may for instance be calculated by Fourier's law.

This law can be written as:

$$E\left(t_{i,j}^n\right) = \frac{K.A.\delta t.\Delta T}{\Delta x}$$

where:

$E\left(t_{i,j}^n\right)$ is the exchanged energy between cell $C_{i,j}$ and a neighbour cell, at time point $t_{i,j}^n$

K is a thermal conductivity of the material. When the state is not the same at both sides, K may be computed from the rule: the inverse is the semi-addition of inverses.

A is the contact area between cells, so depend on the discretization process into a mesh;

$\delta t$ is the time duration taken into consideration, i.e. the time step calculated as previously described;

$\Delta T$ is the temperature difference between adjacent cells,

$\Delta x$ is the depth of the cell.

In fact, all of the variables depend on initial conditions (mesh configuration) and on the material, except the temperature difference between the two considered cells, $\Delta T$. So the energy exchanged between cell $C_{i,j}$ and cell $C_{i+1,j}$ is a function of the temperature difference $E\left(t_{i,j}^n\right) = f\left(T_{i,j}, T_{i+1,j}\right)$.

So, to sum up, at step S31, a cell $C_{i,j}$ takes the energy calculated by neighbour cells, and at step S33, it calculates its exchanged energy (perceived from its point of view), which will be considered by neighbour cells at their own step S31. On can clearly see that this process is a parallel process among all cells of the mesh.

At step S34, the cell can update again its aggregation state and its temperature (and some potential other thermal data), since the exchanged estimated in step S33 may influence them. These data remain valid for the cell until the next time point, calculated at step S32.

As we have seen, the process is iterative, and the updating step S3 will be triggered again for the same cell when the global time t will reach the newly calculated time point.

According to embodiments, improvements to this process can be proposed.

In particular, improvements may be proposed to address the abruptic, or thermal shock, of the impact of the laser beam on the cells. This abruptic may jeopardize, in some cases, the convergence of the iterative process.

For instance, when the laser beam reaches the end of the object under manufacturing, there may be a strong temperature gradient between the cells impacted by the laser bean, and cells outside of the object. Experimentations have shown, with real discretization parameters, that a maximum range of temperature can happen along only 3 cells.

Furthermore, the impact of the laser beam is so abrupt that is may be difficult to reflect according to the non-uniform time stepping mechanism. Indeed, in general, the laser beam impacts a given cell between 2 successive time points. If the cell is associated to a long time step because there were formerly low temperature gradient, then the next time point may be too far in time to take into account immediately the thermal shock.

Some solution may be proposed

For instance, according to embodiments, the impact of the laser beam may be reflected in a larger zone that the real impact, i.e. in more than one cell: energy may be injected to a set of cells surrounding the cell corresponding to the laser beam.

This injected energy may have a value decreasing with the distance to the cell corresponding to the laser beam. For instance, a decreasing function f may be defined, so that the energy $E_B$ injected to a cell B may be defined as $E_B=f(d_{BA})$, where A is the cell corresponding to the laser beam and $d_{BA}$ represent the distance between cell A and cell B. For computing reason, the result of this function be set to 0 when the distance is beyond a configured0 threshold. For instance, the decreasing function may be according to a Gaussian curve, centred at cell A.

According to embodiments, the time step of a given cell may be forced to a low value (for instance one increment of the global time) when the cell is impacted by the laser beam. This feature allows the impacted cell to update faster so as to react to the thermal shock imposed by the laser beam. However, it applies from the next time point on, and the cell is not updated at the exact time it is impacted by the laser beam.

According to embodiment, when a given cell is impacted by the laser beam, it is forced to trigger an updating step S3, either immediately, or at a next time point that is forced to be as close in time as possible (for instance the next increment of the global time).

According to embodiments, the iterative process may be implemented using parallelism.

Parallelism enables to increase performance, ideally proportional to the number of cores. Several approaches may be considered.

Let us consider a mesh of cells, each cell iteratively updating its thermal data according to its neighbours. We will further assume that each cell will have only 4 neighbour cells, according to the 4 main directions (or 6 in case of a 3D embodiment).

In order to achieve an efficient parallel implementation, one need to ensure that there is no collision in the memory write/read access. That is, we need to avoid that two processes access the temperature of the same cell, which one writes on it, and the other reads. Therefore, a control is required over the temperature maps, over the memory access.

Two general approaches can be foreseen :

- Let the computations in the different processes flow uncontrollably, but establish semaphores in the memory accesses, in such a way that, if a first process is accessing a memory location, a second process cannot do so until the first one finishes. A standard simulation can require tens of trillions of accesses. It does not seem that, by itself, it will be an optimal solution.
- Establish a global strategy that avoids collisions. This one seems optimal.

The adopted strategy is to consider the mesh as a chessboard, distinguishing the 'white' cells from the 'black' ones. Note that, to compute the temperature of a black cell, it is only required to know the temperature map of the white cells, of its 4 white neighbours (6 in 3D). The chessboard strategy therefore allows that all blacks nodes to be computed at the same time, or in any order, without any collision. The same can be said for white, which can be computed at the same time without collisions. So, the chessboard strategy alternates the execution of all white nodes, with the execution of all black nodes (in one iteration black nodes is executed, and in the next all white nodes).

Let us remember that the exchange is associated with each contact area between cells, not with each cell, but that, in the iterative process, we decided to associate the energy exchanges with each node, since there are other energies that intervene in the balance (injection of the laser beam and losses).

If I(k,A,B) represents the kth exchange from the white node A toward the black node B, and if $C_A(k)$ and $C_B(k)$ are the subsequent operations (losses, change of state, compute temperature,...) over node A and over node B, respectively, then the sequence of iterations of actions given over a contact area:

$$[...\quad [I(k-1,A,B) \cdot C_A(k-1) \cdot C_B(k-1)] \quad * \quad [I(k,A,B) \cdot C_A(k) \cdot C_B(k)] \quad *$$

$$[I(k+1,A,B) \cdot C_A(k+1) \cdot C_B(k+1)]...$$

can be rearranged as :

$$..[C_A(k-2) \cdot I(k-1,A,B) \cdot C_A(k-1)] \quad * \quad [C_B(k-1) \cdot I(k,A,B) \cdot C_B(k)] \quad * \quad [C_A(k) \cdot I(k+1,A,B)$$

$$\cdot C_A(k+1)]...$$

In this latter expression, each pair of brackets encloses an operation only on cell A or only on cell B, but never on both.

Therefore this sequence of actions can be assigned to a single cell, independently of others. So, in each update of a given cell, the following sequence of actions must be done:

1. It collects the energies that its neighbors have pass to itself in the previous exchanges.
2. It computes the state change.
3. It computes the new energies exchanged with the neighbors, and then, it passes the results to those (which will be considered in step 1 of their own executions).
4. Re-computes the state again.

Then a computational distribution strategy shall be defined, i.e. the work distribution, or mapping, of cell tasks onto software processes that are running at the same time.

A first approach is a "Geometric Decomposition". It is one of the most common strategies, where each process is associated with a different spatial zone. This way of grouping reduces the (boundary/ volume) ratio, where volume here means the number of cells associated with the process, and border is the perimeter information that is required by the other processes to be able to carry out their own computations.

Geometric decomposition supports multi-machine processing, where borders are communicated via the network. As this communication penalizes the performance, the border/volume ratio must be minimal.

However, this strategy does not apply well to the non-uniform time stepping method, since not all areas have the same computation: those areas where the laser beam is applied require a more frequent update. Such an approach may thus be inefficient.

Instead, another approach consists in focusing on a well-balanced distribution, where it is intended that the work of each process by region gets to be similar. Obviously, the border/volume ratio will be not optimal, so it is not a suitable strategy for multi-machines.

According to embodiments, an implementation on a single computer is proposed, but with many CPUs. This allows to perform communication between zones, since the memory is shared. With Google Cloud Platform (GCP), we can reach the hundred Cores. The implementation gets to be a multithread programming, where the distribution is not geometric, but suitable to be well balanced on those zones where the laser is injected.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

**Claims**

**1.** Method for automatic prediction of a thermal behaviour of a material (2) composing an object (3) during laser additive manufacturing, comprising

- an initialization step (S0) comprising discretizing an area surrounding said object, as a mesh of cells and associating an initial time point to each cell of said mesh,
- iteratively updating (S1) a timer and comparing (S2) a time provided by said timer with said times points and, when said time reaches a time point associated with a given cell, triggering an updating step (S3) comprising:

  ◦ determining (S31) a quantity of energy exchanged from a previous time point associated with said given cell;
  ◦ updating (S32) at least an aggregation state, a temperature and said time point associated with said given cell, according to said quantity of energy;
  ◦ determining (S33) second quantities of energy, exchanged with a set of neighbour cells, until a closest in time between said time point associated with said given cell, and respective time points associated with said neighbour cells;
  ◦ updating again (S34) said aggregation state and said temperature

2. The method of claim 1, wherein updating (S32) and updating again (S34) comprise predicting generation of pores.

3. The method of claim 1 or claim 2, further comprising a step of analysing results of said updating step (S3) of a set of said mesh to detect conditions of defects and, accordingly, trigger actions.

4. The method according to both claims 2 and 3, wherein said conditions are based on the prediction of said generation of pores.

5. The method according to any of the previous claims, wherein said area is at least a part of an operation surface of said material onto which a laser beam operates.

6. The method according to any of the previous claims, wherein said quantity of energy comprises energy exchanged between said given cell and neighbour cells, energy lost by contact with an outside system, and energy injected by a laser beam.

7. The method according to claim 6, wherein energy of said laser beam is injected to a set of cells surrounding the cell corresponding to the laser beam.

8. The method according to claim 7, wherein said energy is injected with a value decreasing with the distance to said cell corresponding to the laser beam

9. The method according to any of the previous claims, wherein said updating step is based on data provided by an additive manufacturing apparatus (1).

10. Simulation apparatus (41) for automatic prediction of a thermal behaviour of a material (2) composing an object (3) during laser additive manufacturing, comprising means for performing:

- an initialization step (S0) comprising discretizing an area surrounding said object, as a mesh of cells and associating an initial time point to each cell of said mesh,
- iteratively updating (S1) a timer and comparing (S2) a time provided by said timer with said times points and, when said time reaches a time point associated with a given cell, triggering an updating step (S3) comprising:

  • determining (S31) a quantity of energy exchanged from a previous time point associated with said given cell;
  • updating (S32) at least an aggregation state, a temperature and said time point associated with said given cell, according to said quantity of energy;
  • determining (S33) second quantities of energy, exchanged with a set of neighbour cells, until a closest in time between said time point associated with said given cell, and respective time points associated with said neighbour cells;
  • updating again (S34) said aggregation state and said temperature

11. The apparatus of claim 10, further configured to predict generation of pores in said updating (S32) and updating again (S34) steps.

12. The apparatus of claim 10 or claim 11, wherein the means comprises

- an array of processors; and,
- at least one shared memory including computer program code, the at least one memory and computer program code configured to, with the at least one processor, cause the performance of the apparatus.

13. System comprising an apparatus according to any of claim 10 or 11 and an additive manufacturing apparatus (1).

14. System according to claim 13, further comprising a monitoring apparatus (42) configured to detect conditions of defects and, accordingly, trigger actions.

15. A computer readable medium encoding a machine-executable program of instructions to perform a method according to any one of claims 1 to 9.

**Amended claims in accordance with Rule 137(2) EPC.**

1. Method for automatic prediction of a thermal behaviour of a material (2) composing an object (3) during laser additive manufacturing, comprising

- an initialization step (S0) at a simulation apparatus (41), comprising discretizing an area surrounding said object, as a mesh of cells and associating an initial time point to each cell of said mesh,
- iteratively updating (S1), at a simulation apparatus (41), a timer and comparing (S2) a time provided by said timer with said times points and, when said time reaches a time point associated with a given cell, triggering an updating step (S3) comprising:

  ◦ determining (S31) a quantity of energy exchanged from a previous time point associated with said given cell;
  ◦ updating (S32) at least an aggregation state, a temperature and said time point associated with said given cell, according to said quantity of energy;
  ◦ determining (S33) second quantities of energy, exchanged with a set of neighbour cells, until a closest in time between said time point associated with said given cell, and respective time points associated with said neighbour cells;
  ◦ updating again (S34) said aggregation state and said temperature

wherein updating (S32) and updating again (S34) comprise predicting generation of pores; and.
, further comprising a step, at a monitoring apparatus (42), of analysing results of said updating step (S3) of a set of said mesh to detect conditions of defects and, accordingly, trigger actions.

2. The method according to claim 1, wherein said conditions are based on the prediction of said generation of pores.

3. The method according to any of the previous claims, wherein said area is at least a part of an operation surface of said material onto which a laser beam operates.

4. The method according to any of the previous claims, wherein said quantity of energy comprises energy exchanged between said given cell and neighbour cells, energy lost by contact with an outside system, and energy injected by a laser beam.

5. The method according to claim 4, wherein energy of said laser beam is injected to a set of cells surrounding the cell corresponding to the laser beam.

6. The method according to claim 5, wherein said energy is injected with a value decreasing with the distance to said cell corresponding to the laser beam

7. The method according to any of the previous claims, wherein said updating step is based on data provided by an additive manufacturing apparatus (1).

8. Simulation apparatus (41) for automatic prediction of a thermal behaviour of a material (2) composing an object (3) during laser additive manufacturing, comprising means for performing:

- an initialization step (S0) comprising discretizing an area surrounding said object, as a mesh of cells and associating an initial time point to each cell of said mesh,
- iteratively updating (S1) a timer and comparing (S2) a time provided by said timer with said times points and, when said time reaches a time point associated with a given cell, triggering an updating step (S3) comprising:

  • determining (S31) a quantity of energy exchanged from a previous time point associated with said given cell;
  • updating (S32) at least an aggregation state, a temperature and said time point associated with said given cell, according to said quantity of energy;
  • determining (S33) second quantities of energy, exchanged with a set of neighbour cells, until a closest in time between said time point associated with said given cell, and respective time points associated with said neighbour cells;
  • updating again (S34) said aggregation state and said temperature

further configured to predict generation of pores in said updating (S32) and updating again (S34) steps.

9.  System comprising an apparatus according to claim 8 and an additive manufacturing apparatus (1).

10. System according to claim 103, further comprising a monitoring apparatus (42) configured to detect conditions of defects and, accordingly, trigger actions.

11. A computer readable medium storing a machine-executable program of instructions to perform a method according to any one of claims 1 to 7.

FIG. 1

FIG. 2

FIG. 3

FIG. 4

FIG. 5

FIG. 6

**FIG. 7**

FIG. 8

Europäisches
Patentamt

European
Patent Office

Office européen
des brevets

## EUROPEAN SEARCH REPORT

Application Number

EP 21 38 2037

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CHRISTOPH MEIER ET AL: "Thermophysical Phenomena in Metal Additive Manufacturing by Selective Laser Melting: Fundamentals, Modeling, Simulation and Experimentation", ARXIV.ORG, CORNELL UNIVERSITY LIBRARY, 201 OLIN LIBRARY CORNELL UNIVERSITY ITHACA, NY 14853, 4 September 2017 (2017-09-04), XP080824030, * abstract * * page 6, last paragraph - page 8, paragraph 2 * * page 23, paragraph 2.3 - page 30 * * page 16, paragraph 2.2 - page 23 * -& N Hodge ET AL: "Implementation of a Thermomechanical Model in Diablo for the Simulation of Selective Laser Melting", , 15 October 2013 (2013-10-15), pages 1-49, XP055407605, DOI: 10.2172/1108835 Retrieved from the Internet: URL:https://digital.library.unt.edu/ark:/6 7531/metadc872671/m2/1/high_res_d/1108835. pdf [retrieved on 2017-09-18] * the whole document * | 1-15 | INV. B22F10/368 B22F10/38 B33Y50/00 G06F30/00 |
| X | WO 2020/056405 A1 (UNIV NORTHWESTERN [US]) 19 March 2020 (2020-03-19) * page 139, line 13 - page 152, line 21; figures 89-94; example 6 * | 1-15 | |
| X | CN 110 705 158 A (UNIV HUAZHONG SCIENCE TECH) 17 January 2020 (2020-01-17) * abstract; figures * | 1-15 | |

TECHNICAL FIELDS
SEARCHED (IPC)

B22F
G06F
B33Y

-/--

The present search report has been drawn up for all claims

| Place of search | Date of completion of the search | Examiner |
|---|---|---|
| The Hague | 22 July 2021 | Ceulemans, Judy |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

Europäisches
Patentamt

European
Patent Office

Office européen
des brevets

# EUROPEAN SEARCH REPORT

Application Number

EP 21 38 2037

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| T | LIU LI ET AL: "Nonuniform-time-step explicit Runge-Kutta scheme for high-order finite difference me", COMPUTERS AND FLUIDS, PERGAMON PRESS, NEW YORK, NY, GB, vol. 105, 16 September 2014 (2014-09-16), pages 166-178, XP029090141, ISSN: 0045-7930, DOI: 10.1016/J.COMPFLUID.2014.09.008 * the whole document * | 1-10 | |

-----

TECHNICAL FIELDS
SEARCHED      (IPC)

The present search report has been drawn up for all claims

| Place of search | Date of completion of the search | Examiner |
|---|---|---|
| The Hague | 22 July 2021 | Ceulemans, Judy |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 21 38 2037

This annex lists the patent family members relating to the patent documents cited in the above-mentioned European search report.
The members are as contained in the European Patent Office EDP file on
The European Patent Office is in no way liable for these particulars which are merely given for the purpose of information.

22-07-2021

| Patent document cited in search report | | Publication date | Patent family member(s) | | Publication date |
|---|---|---|---|---|---|
| WO 2020056405 | A1 | 19-03-2020 | US 2020089826 A1<br>WO 2020056405 A1 | | 19-03-2020<br>19-03-2020 |
| CN 110705158 | A | 17-01-2020 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **NESMA T. ABOULKHAIR et al.** 3D printing of Aluminium alloys: Additive Manufacturing of Aluminium alloys using Selective Laser Melting. *Progress in Materials Science,* December 2019, vol. 106

- **NESMA T. ABOULKHAIR et al.** Reducing Porosity in AlSi10Mg parts processed by Selective laser melting. *Addit Manuf,* 2014, vol. 1-4, 77-86